# EUROPEAN PATENT SPECIFICATION

(11) **EP 4 369 051 B1**
(45) Date of publication and mention of the grant of the patent: **29.07.2026**
(21) Application number: 22913240.2
(22) Date of filing: 29.06.2022
(51) Int. Cl.: G01H 9/00, G01V 1/36, G01V 1/48, G01V 1/22

(54) **METHOD AND APPARATUS FOR IMPROVING DAS SIGNAL-TO-NOISE RATIO BY MEANS OF LOCAL FK TRANSFORM**
VERFAHREN UND VORRICHTUNG ZUR VERBESSERUNG DES SIGNAL-RAUSCH-VERHÄLTNISSES DES DAS MITTELS LOKALER FK-TRANSFORMATION
PROCÉDÉ ET APPAREIL POUR AMÉLIORER LE RAPPORT SIGNAL SUR BRUIT DAS AU MOYEN D'UNE TRANSFORMÉE FK LOCALE

(30) Priority: 29.12.2021 CN 202111631469
(43) Date of publication of application: 15.05.2024
(73) Proprietor: China National Petroleum Corporation, Beijing 100007 (CN); BGP Inc., China National Petroleum Corporation, Hebei 072751 (CN)
(72) Inventor: LI, Yanpeng, Baoding, Hebei 072751 (CN); WU, Junjun, Baoding, Hebei 072751 (CN); WANG, Jing, Baoding, Hebei 072751 (CN); ZHANG, Yanbin, Baoding, Hebei 072751 (CN)
(74) Representative: Petraz, Gilberto Luigi
(86) International application number: PCT/CN2022/102502
(87) International publication number: WO 2023/123951

(56) References cited:
- WO-A2-2011/144215
- CN-A- 105 158 801
- CN-A- 110 058 305
- CN-A- 111 965 700
- CN-A- 111 965 704
- CN-A- 113 640 882
- US-A1- 2015 117 151
- US-A1- 2016 320 509
- US-A1- 2021 003 726
- US-A1- 2021 199 832
- ANONYMOUS: "F-k filtering", 4 December 2019 (2019-12-04), pages 1 - 2, XP093227745, Retrieved from the Internet <URL:https://wiki.seg.org/w/index.php?title=F-k_filtering&oldid=141948> [retrieved on 20241125]
- CHENG, KAI: "Study on the Pre-stack Denoising Method of Seismic Data", BASIC SCIENCES, CHINA MASTER’S THESES FULL-TEXT DATABASE, no. 3, 15 March 2013 (2013-03-15), pages 9 - 12, ISSN: 1674-024

## Description

### Field of the Invention

The present disclosure relates to the technical field of optical fiber sensing and seismic data processing, in particular to a method for improving DAS signal-to-noise ratio by means of local FK transform, an apparatus for improving DAS signal-to-noise ratio by means of local FK transform and a corresponding storage medium.

### Background of the Invention

An optical fiber distributed acoustic sensing (DAS) technology is a rapidly developing new technology in recent years, which is being increasingly widely used in borehole seismic exploration. Compared with conventional geophone acquisition, it has significant advantages such as high-density sampling and resistance to high temperature and high pressure. The DAS technology mainly uses Rayleigh backscattering (RBS) generated when laser pulse propagates in optical fiber. When formation around the optical fiber vibrates, RBS will carry information of formation vibration changes. Through continuous observation and phase demodulation of this optical signal, seismic wave information of the formation may be obtained.

DAS is relatively suitable for seismic wave observation in a well. When the optical fiber is laid in a suspended mode in the well, its signal-to-noise ratio is relatively low due to poor coupling with a well wall, which seriously affects the overall effect of receiving a seismic wave. How to effectively improve the signal-to-noise ratio of DAS data has become a difficulty in the application of DAS in seismic exploration. Research indicates that currently, certain application effects in improving the signal-to-noise ratio of the DAS data may be worked generally based on modes such as frequency wavenumber domain filtering or median filtering, but such noise cannot be completely eliminated, or it may harm some effective signals. At present, there is no fidelity processing method that uses local FK transform (frequency wavenumber transform) to improve the signal-to-noise ratio of the DAS data. There are still many shortcomings in existing methods in practical applications, and how to effectively improve the signal-to-noise ratio of seismic data collected by the optical fiber DAS without reducing its fidelity is an urgent need.

US-A1-2016/320509 discloses a method for improving signal-to-noise ratio by means of local FK transform as of the preamble of claim 1, wherein data is not acquired by DAS.

### Summary of the Invention

The invention is defined in the appended claims. An objective of an embodiment of the present disclosure is to provide a method and device for improving DAS signal-to-noise ratio by means of local FK transform. Mainly based on the high-density characteristics of borehole seismic data collected by optical fiber DAS, random noise is suppressed adaptively after local FK transform, a linear event is retained, so as to suppress the DAS noise, and improve the signal-to-noise ratio. In practical production applications, the effect of improving the quality of optical fiber DAS seismic data acquisition is obvious, and it is applicable to a denoising processing process of other seismic data.

In order to realize the above objective, a first aspect of the present disclosure provides a method for improving DAS signal-to-noise ratio by means of local FK transform, including: acquiring DAS seismic wavefield data by means of a DAS acquisition instrument; segmenting the DAS seismic wavefield data into a plurality of pieces of local data, each piece of local data having the same dimension as the DAS seismic wavefield data; processing each piece of local data through the following steps:
obtaining an intermediate signal through FK transform; removing partial FK spectral components in the intermediate signal according to scanning energy corresponding to the intermediate signal under different apparent slowness; performing two-dimensional FFT inverse transform on the intermediate signal with the partial FK spectral components removed; and combining all processed local data to obtain new seismic wavefield data. Removing the partial FK spectral components in the intermediate signal according to the scanning energy corresponding to the intermediate signal under the different apparent slowness includes: presetting a set of apparent slowness and scanning parameters of the apparent slowness; and executing the following operations on each apparent slowness:
acquiring the scanning energy corresponding to the intermediate signal under the current apparent slowness; and removing FK spectral components corresponding to the apparent slowness smaller than an energy threshold.

Preferably, segmenting the DAS seismic wavefield data into the plurality of pieces of local data includes: setting a segmentation size and a segmentation step length on each dimension respectively according to the dimensions of the DAS seismic wavefield data; and segmenting the DAS seismic wavefield data into the plurality of pieces of local data according to the segmentation step length in the segmentation size.

Preferably, the dimensions include a time dimension and a space dimension; the segmentation size on the time dimension is determined according to the apparent period in the DAS seismic wavefield data; and the segmentation size on the space dimension is determined according to the apparent wavenumber in the DAS seismic wavefield data.

Preferably, the scanning parameters of the apparent slowness include: an apparent slowness scanning range, intervals between multiple apparent slowness, and a scanning frequency range.

Preferably, combining all the processed local data to obtain the new seismic wavefield data includes: stacking each piece of processed local data according to positions of the local data in the seismic wavefield data; obtaining stacked seismic wavefield data after stacking all the processed local data; and obtaining the new seismic wavefield data according to a stacked value in the stacked seismic wavefield data and the stacking fold corresponding to the stack value.

Preferably, the DAS seismic wavefield data is one of a plurality of pieces of seismic wavefield data in shot gather, and other seismic wavefield data in the shot gather adopts the same processing process and processing parameters as the seismic wavefield data.

A second aspect of the present disclosure further provides an apparatus for improving DAS signal-to-noise ratio by means of local FK transform, including: a DAS acquisition instrument, configured to acquire DAS seismic wavefield data; a data segmenting module, configured to segment the DAS seismic wavefield data into a plurality of pieces of local data, each piece of local data having the same dimension as the DAS seismic wavefield data; a data processing module, configured to obtain an intermediate signal through FK transform, remove partial FK spectral components in the intermediate signal according to scanning energy corresponding to the intermediate signal under different apparent slowness, and perform two-dimensional FFT inverse transform on the intermediate signal with the partial FK spectral components removed; and a data combining module, configured to combine all local data processed by the data processing module to obtain new DAS seismic wavefield data. The data processing module is configured to remove the partial FK spectral components in the intermediate signal according to the scanning energy corresponding to the intermediate signal under the different apparent slowness comprises presetting a set of apparent slowness and scanning parameters; and executing the following operations on each apparent slowness: acquiring the scanning energy corresponding to the intermediate signal under the current apparent slowness, and removing FK spectral components corresponding to the apparent slowness smaller than an energy threshold.

A third aspect of the present disclosure provides a computer readable storage medium, the storage medium stores an instruction, and the instruction, when runs on a computer, enables the computer to execute the method for improving the DAS signal-to-noise ratio by means of local FK transform mentioned above based on the DAS seismic wavefield data acquired by the DAS acquisition instrument.

The above technical solutions have the following beneficial effects:
The implementation of the present disclosure is a method for suppressing random noise and improving the signal-to-noise ratio of the seismic data collected by the optical fiber DAS. After processing of this implementation, noise of the borehole seismic data collected by the optical fiber DAS may be greatly suppressed and eliminated, significantly improving the quality of data information and providing guarantee for subsequent seismic data processing and interpretation. The implementation provided by the present disclosure is further applicable to a denoising processing process of other seismic data.

Other features and advantages of embodiments of the present disclosure will be described in detail in the subsequent detailed description of the embodiments.

### Brief Description of Drawings

Accompanying drawings are used to provide further understanding of embodiments of the present disclosure, form a part of the specification, and are used to explain the embodiments of the present disclosure together with the following detailed description of the embodiments, but do not constitute a limitation on the embodiments of the present disclosure. In the accompanying drawings:
Fig. 1 schematically shows a schematic diagram of steps of a method for improving DAS signal-to-noise ratio by means of local FK transform according to an embodiment of the present application.
Fig. 2 schematically shows a schematic diagram of seismic wavefield data according to an embodiment of the present application.
Fig. 3 schematically shows a schematic diagram of a frequency spectrum after FK transform according to an embodiment of the present application.
Fig. 4 schematically shows a schematic diagram of results of scanning energy under different apparent slowness according to an embodiment of the present application.
Fig. 5 schematically shows a schematic diagram of new seismic wavefield data according to an embodiment of the present application.
Fig. 6 schematically shows a schematic structural diagram of an apparatus for improving DAS signal-to-noise ratio by means of local FK transform according to an embodiment of the present application.

### Detailed Description of the Embodiments

The specific implementation of embodiments of the present disclosure is illustrated in detail below in conjunction with the accompanying drawings. It should be understood that the specific implementation described herein is only used to illustrate and explain the embodiments of the present disclosure and is not used to limit the embodiments of the present disclosure.

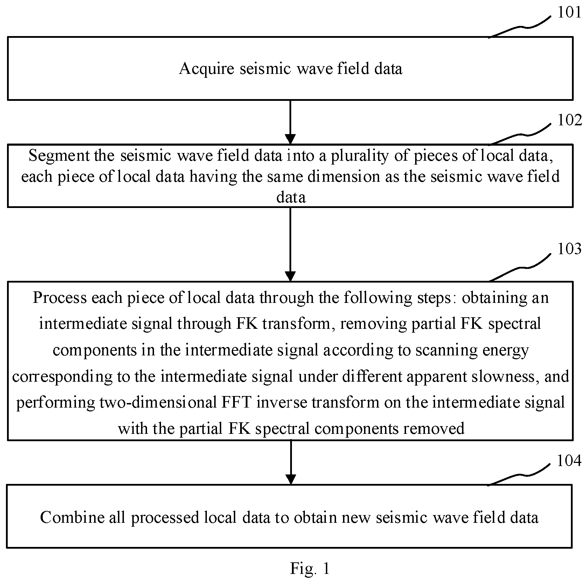

Fig. 1 schematically shows a schematic diagram of steps of a method for improving DAS signal-to-noise ratio by means of local FK transform according to an embodiment of the present application. As shown in Fig. 1, in one embodiment of the present application, the method for improving the DAS signal-to-noise ratio by means of local FK transform is provided, including:
101, acquire seismic wavefield data;
102, segment the seismic wavefield data into a plurality of pieces of local data, each piece of local data having the same dimension as the seismic wavefield data;
103, process each piece of local data through the following steps: obtaining an intermediate signal through FK transform, removing partial FK spectral components in the intermediate signal according to scanning energy corresponding to the intermediate signal under different apparent slowness, and performing two-dimensional FFT inverse transform on the intermediate signal with the partial FK spectral components removed; and
104, combine all processed local data to obtain new seismic wavefield data.

In this implementation, the seismic wavefield data is acquired from an optical fiber distributed acoustic sensing (DAS) acquisition instrument, the acquired seismic wavefield data is segmented into the plurality of pieces of local data, and each piece of local data is a part of the seismic wavefield data. FK transform is performed on each piece of local data, energy is scanned by adopting apparent slowness, FK spectral components are removed based on scanning results, so that energy performance of the noise under different apparent slowness is used to remove the noise, and the signal-to-noise ratio is improved. Finally, the intermediate signal with the partial FK spectral components removed in a frequency domain is inversely transformed and combined into the new seismic wavefield data, and these two steps are reverse processes of segmentation and FK transform in the previous step, so as to improve the signal-to-noise ratio of the original seismic wavefield data.

Through the above mode, the noise of the borehole seismic data collected by the optical fiber DAS can be effectively suppressed, and guarantee is provided for subsequent seismic data processing and interpretation.

In some implementations provided by the present disclosure, segmenting the seismic wavefield data into the plurality of pieces of local data includes: a segmentation size and a segmentation step length are set on each dimension respectively according to the dimensions of the seismic wavefield data; and the seismic wavefield data is segmented into the plurality of pieces of local data according to the segmentation step length and the segmentation size. The segmentation mode in this implementation may adopt a sliding window mode for segmentation. For example, the segmentation sizes are set on the dimensions to be L1, L2 ..., and Ln respectively, n is the number of dimensions, and correspondingly, sliding step lengths are Step₁, Step₂, ..., and Stepₙ respectively. Through the above segmentation mode, the segmented local data is obtained, each piece of local data has the same dimension as the seismic wavefield data, but it is only a subset of the original seismic wavefield data.

In some implementations provided by the present disclosure, the dimensions include a time dimension and a space dimension; the segmentation size on the time dimension is determined according to the apparent period in the seismic wavefield data; and the segmentation size on the space dimension is determined according to the apparent wavenumber in the seismic wavefield data (the apparent wavenumber is the reciprocal of the apparent wavelength). The commonly selected dimensions of the seismic wavefield data include the time dimension and the space dimension, and the space dimension may be in a depth direction. The corresponding segmentation size L1 on the time dimension may be determined according to the apparent period of seismic wavefield, which is generally 2-5 times the apparent period. The corresponding segmentation size L2 on the space dimension may be determined according to the apparent wavenumber K, which is generally 2-5 times of 1/K (the apparent wavelength), namely 2-5/K. For example, the segmentation sizes corresponding to the time dimension and the space dimension may be taken as L1=100 ms and L2=100 meters, and correspondingly, the segmentation step lengths Step₁=50 ms and Step₂=10 meters.

In the invention, removing the partial FK spectral components in the intermediate signal according to the scanning energy corresponding to the intermediate signal under different apparent slowness includes: a set of apparent slowness and scanning parameters of the apparent slowness are preset; for example, here the apparent slowness S is equal to K/F, 100 pieces of apparent slowness are scanned, the apparent slowness scanning ranges from -0.002 s/m to 0.002 s/m with an interval of 0.00004 s/m, and a scanning frequency range is a seismic wave dominant frequency band ranging from 10Hz to 50 Hz. And the following operations are executed on each piece of apparent slowness: acquiring the scanning energy corresponding to the intermediate signal under the current apparent slowness, and removing FK spectral components corresponding to the apparent slowness smaller than an energy threshold. Taking the use of a sliding window for segmentation as an example, FK transform is performed on local data in the sliding window, energy is scanned according to different apparent slowness, and a threshold A is set. Here, a value of the threshold A may range from Amax×10% to Amax×50%, and Amax here is maximum scanning energy in local FK domain. The FK spectral components corresponding to the apparent slowness greater than the threshold are retained, and the FK spectral components corresponding to the apparent slowness smaller than the threshold are removed, namely set to be 0. Through the above implementation, the FK spectral components with low energy may be removed in an FK domain, so that a purpose of suppressing random noise is realized.

In some optional implementations provided by the present disclosure, combining all the processed local data to obtain the new seismic wavefield data includes: each piece of processed local data is stacked according to positions of the local data in the seismic wavefield data; stacked seismic wavefield data is obtained after stacking all the processed local data; and the new seismic wavefield data is obtained according to a stacked value in the stacked seismic wavefield data and the stacking fold corresponding to the stacked value. Specifically, the processed local data obtained in the previous implementation is stacked according to original time and space positions, and stacked results are written into output records. The stack mode includes sliding and stacking along the time and space dimensions with Step₁=50 ms and Step₂=10 meters as the step lengths, the stacking fold of each sample point are recorded, a stacked value of each sample point of final stack records is divided by the stacking fold to obtain the final seismic wavefield data after suppressing noise, namely, the new seismic wavefield data, and it is taken as the output records.

In some optional implementations provided by the present disclosure, the seismic wavefield data is one of a plurality of pieces of seismic wavefield data in shot gather, and other seismic wavefield data in the shot gather adopts the same processing process and processing parameters as the seismic wavefield data. The above steps are repeated for all to-be-processed shot gathers, so as to complete the processing of improving the signal-to-noise ratio of all seismic wavefield data in the shot gathers. The seismic wavefield data after above processing is provided for subsequent processing modules such as deconvolution, wavefield separation, and migration imaging, to complete all processing, and it is provided for seismic geological interpretation and the like.

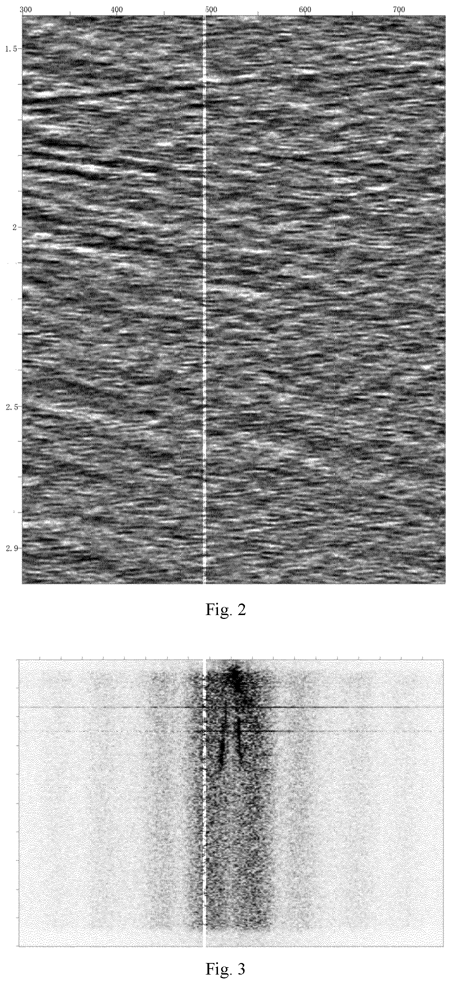

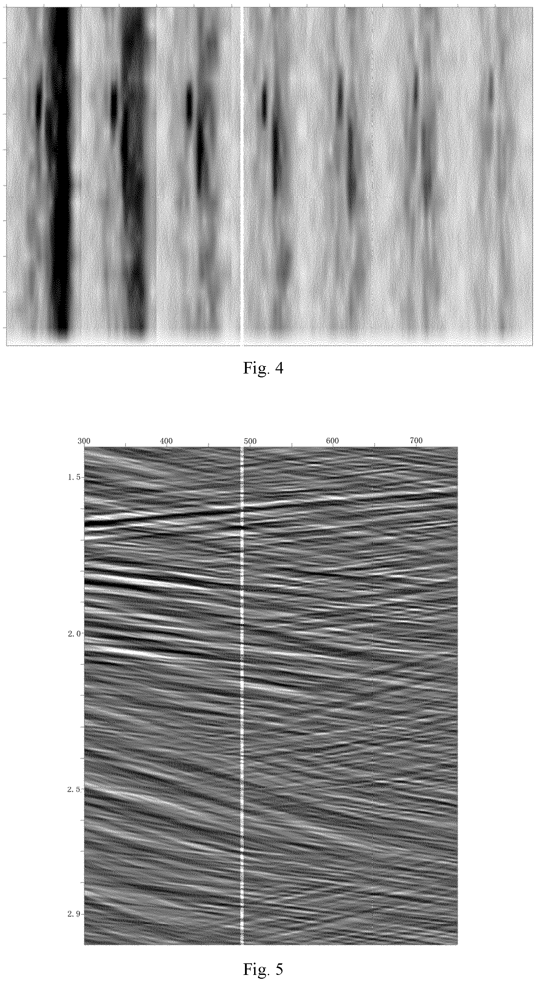

In order to verify the effect of the implementation of the present disclosure, actual borehole seismic data collected by optical fiber DAS for a certain oil well in BoHai Bay of China are processed as follows. First, the optical fiber is suspended in a wellbore, vibroseis excitation is performed through the ground to obtain seismic wavefield data collected by the optical fiber DAS, the seismic wavefield data is provided with a sliding window in a time direction of 100 milliseconds and a space direction of 100 meters for local FK transform, energy scanning is performed in an apparent slowness direction in a transform domain, the threshold is set according to the energy distribution, partial spectral component is selected, and the signal-to-noise ratio of the seismic data collected by the optical fiber DAS is greatly improved after reverse transform. The specific steps are as follows:
1) an optical fiber distributed acoustic sensing (DAS) acquisition instrument is used, optical cables are suspended in a well or laid outside a casing pipe for receiving, the artificial vibroseis is excited on the ground to collect DAS seismic wavefield data of a whole well section, as shown in Fig. 2. Fig. 2 schematically shows a schematic diagram of seismic wavefield data according to an embodiment of the present application.
2) a sliding window is selected for the collected data obtained in step 1), sizes of the sliding window in time and depth directions are L1=100 ms and L2=100 meters respectively, and sliding step lengths are Step₁=50 ms and Step₂=10 meters respectively.
3) FK transform is performed on data in the sliding window, transformed results are as shown in Fig. 3, and Fig. 3 schematically shows a schematic diagram of a frequency wavenumber spectrum after FK transform according to an embodiment of the present application. The energy is scanned according to different apparent slowness, scanned results are as shown in Fig. 4, and Fig. 4 schematically shows a schematic diagram of results of scanning energy under different apparent slowness according to an embodiment of the present application. A threshold A=Amax*50% is set, that is, it is 50% of the maximum scanning energy, the FK spectral components corresponding to the apparent slowness greater than the threshold are retained, and the FK spectral components corresponding to the apparent slowness smaller than the threshold are removed, namely set to be 0. Here, the apparent slowness S is equal to K/F, the apparent slowness scanning ranges from -0.002 s/m to 0.002 s/m, 100 pieces of apparent slowness are scanned with an interval of 0.00004 s/m, and a scanning frequency range is a seismic wave dominant frequency band ranging from 10 Hz to 50 Hz.
4) two-dimensional FFT inverse transform is performed by using FK domain data obtained in step 3) to obtain records of the current sliding window after removing noise.
5) the seismic data after suppressing noise obtained in step 4) is stacked on output records according to original time and space positions, sliding is performed along the time and space dimensions with Step₁=50 ms and Step₂=10 meters as the step lengths, steps 3) and 4) are repeated, the stacking fold of each sample point is recorded, each sample point of final stack records is divided by the stacking fold to obtain the final output records after suppressing noise, as shown in Fig. 5, and Fig. 5 schematically shows a schematic diagram of new seismic wavefield data according to an embodiment of the present application.
6) The steps 3), 4) and 5) are repeated for all to-be-processed shot gathers, so as to complete the processing of improving the signal-to-noise ratio of all seismic wavefield data.
7) The data after above processing is provided for subsequent processing modules such as deconvolution, wavefield separation, and migration imaging, to complete all processing, and it is provided for seismic geological interpretation and the like.

Through the above implementation, the noise of the borehole seismic data collected by the optical fiber DAS may be suppressed and eliminated to a large extent, thereby improving the quality of data information and providing guarantee for subsequent seismic data processing and interpretation.

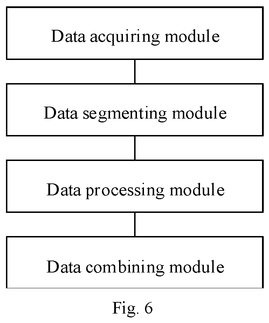

Based on the same inventive concept, an implementation of the present disclosure further provides an apparatus for improving DAS signal-to-noise ratio by means of local FK transform. Fig. 6 schematically shows a schematic structural diagram of an apparatus for improving DAS signal-to-noise ratio by means of local FK transform according to an embodiment of the present application. As shown in Fig. 6, the apparatus includes: a data acquiring module, configured to acquire seismic wavefield data; a data segmenting module, configured to segment the seismic wavefield data into a plurality of pieces of local data, each piece of local data having the same dimension as the seismic wavefield data; a data processing module, configured to obtain an intermediate signal through FK transform, remove partial FK spectral components in the intermediate signal according to scanning energy corresponding to the intermediate signal under different apparent slowness, and perform two-dimensional FFT inverse transform on the intermediate signal with partial FK spectral components removed; and a data combining module, configured to combine all local data processed by the data processing module to obtain new seismic wavefield data.

In some optional implementations, segmenting the seismic wavefield data into the plurality of pieces of local data includes: a segmentation size and a segmentation step length are set on each dimension respectively according to the dimensions of the seismic wavefield data; and the seismic wavefield data is segmented into the plurality of pieces of local data according to the segmentation step length in the segmentation size.

In some optional implementations, the dimensions include a time dimension and a space dimension; the segmentation size on the time dimension is determined according to the apparent period in the seismic wavefield data; and the segmentation size on the space dimension is determined according to the apparent wavenumber in the seismic wavefield data.

In the invention, removing the partial FK spectral components in the intermediate signal according to the scanning energy corresponding to the intermediate signal under different apparent slowness includes: a set of apparent slowness and scanning parameters are preset; and the following operations are executed on each piece of apparent slowness in the plurality of pieces of apparent slowness: acquiring the scanning energy corresponding to the intermediate signal under the current apparent slowness, and removing FK spectral components corresponding to the apparent slowness smaller than an energy threshold.

In some optional implementations, the scanning parameters of the apparent slowness include: an apparent slowness scanning range, intervals between the plurality of pieces of apparent slowness, and a scanning frequency range.

In some optional implementations, combining all the processed local data to obtain the new seismic wavefield data includes: each piece of processed local data is stacked according to positions of the local data in the seismic wavefield data; stacked seismic wavefield data is obtained after stacking all the processed local data; and the new seismic wavefield data is obtained according to a stacked value in the stacked seismic wavefield data and the stacking fold corresponding to the stacked value.

In some optional implementations, the seismic wavefield data is one of a plurality of pieces of seismic wavefield data in shot gather, and other seismic wavefield data in the shot gather adopts the same processing process and processing parameters as the seismic wavefield data.

Those skilled in the art may understand that, the structure shown in Fig. 6 is merely a block diagram of a partial structure related to a solution in the present application, and does not constitute a limitation to a computer device to which the solution in the present application is applied. Specifically, the computer device may include more components or fewer components than those shown in the figure, or may combine some components, or may have a different component deployment.

The specific limitations of each implementation step in the apparatus for improving the DAS signal-to-noise ratio by means of local FK transform mentioned above may refer to the limitations on the method for improving the DAS signal-to-noise ratio by means of local FK transform mentioned above, which will not be repeated here. Its beneficial effects may also be applicably inferred according to the method for improving the DAS signal-to-noise ratio by means of local FK transform mentioned above.

The present application further provides a computer program product, and the computer program product, when executed on a data processing device, is suitable for executing a program that initializes steps of the method for improving the DAS signal-to-noise ratio by means of local FK transform based on the DAS seismic wavefield data acquired by the DAS acquisition instrument.

Those skilled in the art will appreciate that the embodiments of the present application may be provided as methods, systems, or computer program products. Therefore, the present application may take the form of a full hardware embodiment, a full software embodiment, or an embodiment combining software and hardware. Besides, the present application may adopt the form of a computer program product implemented on one or more computer available storage media (including but not limited to a disk memory, a CD-ROM, an optical memory and the like) containing computer available program codes.

The present application is described with reference to the flow diagram and/or block diagram of the method, device (system), and computer program product according to the embodiments of the present application. It should be understood that each flow and/or block in the flow chart and/or block diagram and the combination of flows and/or blocks in the flow chart and/or block diagram may be implemented by computer program instructions. These computer program instructions may be provided to processors of a general-purpose computer, a special-purpose computer, an embedded processor or other programmable data processing devices to generate a machine, so that instructions executed by processors of a computer or other programmable data processing devices generate an apparatus for implementing functions specified in one or more flows of the flow chart and/or one or more blocks of the block diagram.

These computer program instructions may also be stored in a computer-readable memory capable of guiding a computer or other programmable data processing devices to work in a specific manner, so that instructions stored in the computer-readable memory generate a manufacturing product including an instruction apparatus, and the instruction apparatus implements the functions specified in one or more flows of the flow chart and/or one or more blocks of the block diagram.

These computer program instructions may also be loaded on the computer or other programmable data processing devices, so that a series of operation steps are executed on the computer or other programmable devices to produce computer-implemented processing, and thus, the instructions executed on the computer or other programmable devices provide steps for implementing the functions specified in one or more flows of the flow chart and/or one or more blocks of the block diagram.

In a typical configuration, a computing device includes one or more central processing units (CPUs), an input/output interface, a network interface, and a memory.

A memory may include a non-permanent memory, a random-access memory (RAM) and/or a non-volatile memory in a computer readable medium, such as a read-only memory (ROM) or a flash RAM. The memory is an example of the computer readable medium.

The computer readable medium includes permanent and non permanent, movable and non movable media, and information storage may be achieved by any method or technology. Information may be a computer readable instruction, a data structure, a program module, or other data. Examples of the computer storage medium include, but are not limited to, a phase-change random access memory (PRAM), a static random access memory (SRAM), a dynamic random access memory (DRAM), other types of random access memory (RAM), a read-only memory (ROM), an electrically erasable programmable read-only memory (EEPROM), a flash memory or other memory technologies, a read-only optical disc read-only memory (CD-ROM), a digital versatile disc (DVD) or other optical storage magnetic cassette tapes, magnetic disk storage or other magnetic storage devices, or any other non transmission medium, which may be used to store information that may be accessed by the computing device. According to the definition in this article, the computer readable medium does not include transitory computer readable media, such as modulated data signals and carriers.

It should also be noted that terms "including", "containing", or any other variation thereof are intended to cover non exclusive inclusion, so that a process, method, commodity, or device that includes a series of elements not only includes those elements, but also other elements that are not explicitly listed, or also include elements inherent in such a process, method, commodity, or device. Without further restrictions, the elements defined by the statement "including one..." do not exclude that there are other identical elements in the process, method, commodity or device including the elements.

The above are only embodiments of the present application and are not intended to limit the present application. For those skilled in the art, the present application may have various modifications and changes. Any modifications, improvements, etc. could be made hereto without departing from the scope of the invention, as defined by the appended claims.

## Claims

1. A method for improving Distributed Acoustic Sensing, DAS, signal-to-noise ratio by means of local FK transform, comprising:
acquiring (101) DAS seismic wavefield data by a DAS acquisition instrument;
segmenting (102) the DAS seismic wavefield data into a plurality of pieces of local data, each piece of local data having the same dimension as the DAS seismic wavefield data;
processing (103) each piece of local data through the following steps: obtaining an intermediate signal through FK transform, removing partial FK spectral components in the intermediate signal according to scanning energy corresponding to the intermediate signal under different apparent slowness, and performing two-dimensional FFT inverse transform on the intermediate signal with the partial FK spectral components removed; and
combining (104) all processed local data to obtain new seismic wavefield data;
**characterized in that** removing the partial FK spectral components in the intermediate signal according to the scanning energy corresponding to the intermediate signal under the different apparent slowness comprises:
presetting a set of apparent slowness and scanning parameters; and
executing the following operations on each apparent slowness: acquiring the scanning energy corresponding to the intermediate signal under the current apparent slowness, and removing FK spectral components corresponding to the apparent slowness smaller than an energy threshold.

2. The method according to claim 1, wherein segmenting the DAS seismic wavefield data into the plurality of pieces of local data, comprises:
setting a segmentation size and a segmentation step length on each dimension respectively according to the dimensions of the DAS seismic wavefield data; and
segmenting the DAS seismic wavefield data into the plurality of pieces of local data according to the segmentation step length and the segmentation size.

3. The method according to claim 2, wherein the dimensions comprise a time dimension and a space dimension;
the segmentation size on the time dimension is determined according to the apparent period in the DAS seismic wavefield data; and
the segmentation size on the space dimension is determined according to the apparent wavenumber in the DAS seismic wavefield data.

4. The method according to claim 1, wherein the scanning parameters of the apparent slowness comprise: an apparent slowness scanning range, intervals between multiple apparent slowness, and a scanning frequency range.

5. The method according to claim 1, wherein combining all the processed local data to obtain the new seismic wavefield data, comprises:
stacking each piece of processed local data according to positions of the local data in the DAS seismic wavefield data;
obtaining stacked seismic wavefield data after stacking all the processed local data; and
obtaining the new seismic wavefield data according to a stacked value in the stacked seismic wavefield data and the stacking fold corresponding to the stacked value.

6. The method according to claim 1, wherein the DAS seismic wavefield data is one of a plurality of pieces of seismic wavefield data in shot gather, and other seismic wavefield data in the shot gather adopts the same processing process and processing parameters as the DAS seismic wavefield data.

7. An apparatus for improving distributed acoustic sensing, DAS, signal-to-noise ratio by means of local FK transform, comprising:
a DAS acquisition instrument, configured to acquire (101) DAS seismic wavefield data;
a data segmenting module, configured to segment (102) the DAS seismic wavefield data into a plurality of pieces of local data, each piece of local data having the same dimension as the DAS seismic wavefield data;
a data processing module, configured to process (103) each piece of local data according to the following steps: obtaining an intermediate signal through FK transform, removing partial FK spectral components in the intermediate signal according to scanning energy corresponding to the intermediate signal under different apparent slowness, and performing two-dimensional FFT inverse transform on the intermediate signal with the partial FK spectral components removed; and
a data combining module, configured to combine (104) all local data processed by the data processing module to obtain new DAS seismic wavefield data;
**characterized in that** removing the partial FK spectral components in the intermediate signal according to the scanning energy corresponding to the intermediate signal under the different apparent slowness comprises:
presetting a set of apparent slowness and scanning parameters; and
executing the following operations on each apparent slowness: acquiring the scanning energy corresponding to the intermediate signal under the current apparent slowness, and removing FK spectral components corresponding to the apparent slowness smaller than an energy threshold.

8. A computer readable storage medium, wherein the storage medium stores an instruction, and the instruction, when runs on a computer, enables the computer to execute the method for improving the DAS signal-to-noise ratio by means of local FK transform according to any one of claims 1 to 6 based on the DAS seismic wavefield data acquired by the DAS acquisition instrument.

## Patentansprüche

1. Verfahren zur Verbesserung des Signal-Rausch-Verhältnisses der verteilten akustischen Erfassung (Distributed Acoustic Sensing), DAS, mittels lokaler FK-Transformation, umfassend:
Aufnehmen (101) von DAS-seismischen Wellenfelddaten durch ein DAS-Aufnahmeinstrument;
Segmentieren (102) der DAS-seismischen Wellenfelddaten in eine Vielzahl von Stücken von lokalen Daten, wobei jedes Stück von lokalen Daten die gleiche Dimension hat wie die DAS-seismischen Wellenfelddaten;
Verarbeiten (103) jedes Stückes von lokalen Daten durch die folgenden Schritte: Erhalten eines Zwischensignals durch FK-Transformation, Entfernen von teilweisen FK-Spektralkomponenten im Zwischensignal gemäß Abtastenergie, die dem Zwischensignal unter verschiedener scheinbarer Langsamkeit entspricht, und Durchführen von zweidimensionaler inverser FFT-Transformation am Zwischensignal mit den teilweisen FK-Spektralkomponenten, die entfernt wurden; und
Kombinieren (104) aller verarbeiteten lokalen Daten, um neue seismische Wellenfelddaten zu erhalten;
**dadurch gekennzeichnet, dass** das Entfernen der teilweisen FK-Spektralkomponenten im Zwischensignal gemäß der Abtastenergie, die dem Zwischensignal unter der verschiedenen scheinbaren Langsamkeit entspricht, umfasst:
Voreinstellen eines Satzes von scheinbaren Langsamkeits- und Abtastparametern; und
Durchführen der folgenden Vorgänge an jeder scheinbaren Langsamkeit: Aufnehmen der Abtastenergie, die dem Zwischensignal unter der aktuellen scheinbaren Langsamkeit entspricht, und Entfernen von FK-Spektralkomponenten, die der scheinbaren Langsamkeit, die kleiner als eine Energieschwelle ist, entsprechen.

2. Verfahren nach Anspruch 1, worin das Segmentieren der DAS-seismischen Wellenfelddaten in die Vielzahl von Stücken von lokalen Daten umfasst:
Einstellen einer Segmentierungsgröße und einer Segmentierungsschrittlänge jeweils an jeder Dimension gemäß den Dimensionen der DAS-seismischen Wellenfelddaten; und
Segmentieren der DAS-seismischen Wellenfelddaten in die Vielzahl von Stücken von lokalen Daten gemäß der Segmentierungsschrittlänge und der Segmentierungsgröße.

3. Verfahren nach Anspruch 2, worin die Dimensionen eine Zeitdimension und eine Raumdimension umfassen;
die Segmentierungsgröße an der Zeitdimension gemäß dem scheinbaren Zeitraum in den DAS-seismischen Wellenfelddaten bestimmt wird; und
die Segmentierungsgröße an der Raumdimension gemäß der scheinbaren Wellenzahl in den DAS-seismischen Wellenfelddaten bestimmt wird.

4. Verfahren nach Anspruch 1, worin die Abtastparameter der scheinbaren Langsamkeit umfassen: einen scheinbaren Langsamkeitsabtastbereich, Intervalle zwischen mehreren scheinbaren Langsamkeiten und einen Abtastfrequenzbereich.

5. Verfahren nach Anspruch 1, worin das Kombinieren aller verarbeiteten lokalen Daten, um die neuen seismischen Wellenfelddaten zu erhalten, umfasst:
Stapeln jedes Stückes von verarbeiteten lokalen Daten gemäß Positionen der lokalen Daten in den DAS-seismischen Wellenfelddaten;
Erhalten von gestapelten seismischen Wellenfelddaten nach dem Stapeln aller verarbeiteten lokalen Daten; und
Erhalten der neuen seismischen Wellenfelddaten gemäß einem gestapelten Wert in den gestapelten seismischen Wellenfelddaten und der Stapelfaltung, die dem gestapelten Wert entspricht.

6. Verfahren nach Anspruch 1, worin die DAS-seismischen Wellenfelddaten eines von einer Vielzahl von Stücken von seismischen Wellenfelddaten in einer Schussaufzeichnung ist, und andere seismische Wellenfelddaten in der Schussaufzeichnung den gleichen Verarbeitungsprozess und Verarbeitungsparameter wie die DAS-seismischen Wellenfelddaten anwenden.

7. Vorrichtung zur Verbesserung des Signal-Rausch-Verhältnisses der verteilten akustischen Erfassung (Distributed Acoustic Sensing), DAS, mittels lokaler FK-Transformation, umfassend:
ein DAS-Aufnahmeinstrument, das dazu eingerichtet ist, DAS-seismische Wellenfelddaten aufzunehmen (101);
ein Datensegmentierungsmodul, das dazu eingerichtet ist, die DAS-seismischen Wellenfelddaten in eine Vielzahl von Stücken von lokalen Daten zu segmentieren (102), wobei jedes Stück von lokalen Daten die gleiche Dimension hat wie die DAS-seismischen Wellenfelddaten;
ein Datenverarbeitungsmodul, das dazu eingerichtet ist, jedes Stück von lokalen Daten durch die folgenden Schritte zu verarbeiten (103): Erhalten eines Zwischensignals durch FK-Transformation, Entfernen von teilweisen FK-Spektralkomponenten im Zwischensignal gemäß Abtastenergie, die dem Zwischensignal unter verschiedener scheinbarer Langsamkeit entspricht, und Durchführen von zweidimensionaler inverser FFT-Transformation am Zwischensignal mit den teilweisen FK-Spektralkomponenten, die entfernt wurden; und
ein Datenkombiniermodul, das dazu eingerichtet ist, alle lokalen Daten, die vom Datenverarbeitungsmodul verarbeitet wurden, zu kombinieren (104), um neue DAS-seismische Wellenfelddaten zu erhalten;
**dadurch gekennzeichnet, dass** das Entfernen der teilweisen FK-Spektralkomponenten im Zwischensignal gemäß der Abtastenergie, die dem Zwischensignal unter der verschiedenen scheinbaren Langsamkeit entspricht, umfasst:
Voreinstellen eines Satzes von scheinbaren Langsamkeits- und Abtastparametern; und
Durchführen der folgenden Vorgänge an jeder scheinbaren Langsamkeit: Aufnehmen der Abtastenergie, die dem Zwischensignal unter der aktuellen scheinbaren Langsamkeit entspricht, und Entfernen von FK-Spektralkomponenten, die der scheinbaren Langsamkeit, die kleiner als eine Energieschwelle ist, entsprechen.

8. Computerlesbares Speichermedium, worin das Speichermedium eine Anweisung speichert, und die Anweisung, wenn sie auf einem Computer läuft, dem Computer ermöglicht, das Verfahren zur Verbesserung des DAS-Signal-Rausch-Verhältnisses mittels lokaler FK-Transformation nach einem der Ansprüche 1 bis 6 aufgrund der DAS-seismischen Wellenfelddaten, die durch das DAS-Aufnahmeinstrument aufgenommen wurden, durchzuführen.

## Revendications

1. Procédé d'amélioration d'un rapport signal sur bruit de détection acoustique distribuée, DAS, au moyen d'une transformée FK locale, comprenant :
l'acquisition (101) de données de champ d'ondes sismiques DAS par un instrument d'acquisition DAS ;
la segmentation (102) des données de champ d'ondes sismiques DAS en une pluralité d'éléments de données locales, chaque élément de données locales ayant la même dimension que les données de champ d'ondes sismiques DAS ;
le traitement (103) de chaque élément de données locales à travers les étapes suivantes : obtention d'un signal intermédiaire par une transformée FK, élimination de composantes de spectre FK partielles dans le signal intermédiaire en fonction de l'énergie de balayage correspondant au signal intermédiaire sous une lenteur apparente différente, et réalisation d'une transformée inverse FFT bidimensionnelle sur le signal intermédiaire avec les composantes de spectre FK partielles éliminées ; et
la combinaison (104) de toutes les données locales traitées pour obtenir de nouvelles données de champ d'ondes sismiques ;
**caractérisé en ce que** l'élimination des composantes de spectre FK partielles dans le signal intermédiaire en fonction de l'énergie de balayage correspondant au signal intermédiaire sous la lenteur apparente différente comprend :
la prédéfinition d'un ensemble de paramètres apparents de lenteur et de balayage ; et
l'exécution des opérations suivantes sur chaque lenteur apparente :
acquisition de l'énergie de balayage correspondant au signal intermédiaire sous la lenteur apparente actuelle, et élimination de composantes de spectre FK correspondant à la lenteur apparente inférieure à un seuil d'énergie.

2. Procédé selon la revendication 1, dans lequel la segmentation des données de champ d'ondes sismiques DAS en la pluralité d'éléments de données locales comprend :
la définition d'une taille de segmentation et d'une longueur de pas de segmentation sur chaque dimension respectivement en fonction des dimensions des données de champ d'ondes sismiques DAS ; et
la segmentation des données de champ d'ondes sismiques DAS en la pluralité d'éléments de données locales en fonction de la longueur de pas de segmentation et de la taille de segmentation.

3. Procédé selon la revendication 2, dans lequel les dimensions comprennent une dimension temporelle et une dimension spatiale ;
la taille de segmentation sur la dimension temporelle est déterminée en fonction de la période apparente dans les données de champ d'ondes sismiques DAS ; et
la taille de segmentation sur la dimension d'espace est déterminée en fonction du nombre d'ondes apparent dans les données de champ d'ondes sismiques DAS.

4. Procédé selon la revendication 1, dans lequel les paramètres de balayage de la lenteur apparente comprennent : une plage de balayage de la lenteur apparente, des intervalles entre plusieurs lenteurs apparentes et une plage de fréquences de balayage.

5. Procédé selon la revendication 1, dans lequel la combinaison de toutes les données locales traitées pour obtenir les nouvelles données de champ d'ondes sismiques comprend :
l'empilement de chaque élément de données locales traitées en fonction des positions des données locales dans les données de champ d'ondes sismiques DAS ;
l'obtention de données de champ d'ondes sismiques empilées après l'empilement de toutes les données locales traitées ; et
l'obtention des nouvelles données de champ d'ondes sismiques selon une valeur empilée dans les données de champ d'ondes sismiques empilées et le numéro d'empilement correspondant à la valeur empilée.

6. Procédé selon la revendication 1, dans lequel les données de champ d'ondes sismiques DAS sont l'un d'une pluralité d'éléments de données de champ d'ondes sismiques dans une collecte de tirs, et d'autres données de champ d'ondes sismiques dans la collecte de tirs adoptent le même processus de traitement et les mêmes paramètres de traitement que les données de champ d'ondes sismiques DAS.

7. Appareil d'amélioration d'un rapport signal sur bruit de détection acoustique distribuée, DAS, au moyen d'une transformée FK locale, comprenant :
un instrument d'acquisition DAS, configuré pour acquérir (101) des données de champ d'ondes sismiques DAS ;
un module de segmentation de données, configuré pour segmenter (102) les données de champ d'ondes sismiques DAS en une pluralité d'éléments de données locales, chaque élément de données locales ayant la même dimension que les données de champ d'ondes sismiques DAS ;
un module de traitement de données, configuré pour traiter (103) chaque élément de données locales selon les étapes suivantes : obtention d'un signal intermédiaire par une transformée FK, élimination de composantes de spectre FK partielles dans le signal intermédiaire en fonction de l'énergie de balayage correspondant au signal intermédiaire sous une lenteur apparente différente, et réalisation d'une transformée inverse FFT bidimensionnelle sur le signal intermédiaire avec les composantes de spectre FK partielles éliminées ; et
un module de combinaison de données, configuré pour combiner (104) toutes les données locales traitées par le module de traitement de données pour obtenir de nouvelles données de champ d'ondes sismiques DAS ;
**caractérisé en ce que** l'élimination des composantes de spectre FK partielles dans le signal intermédiaire en fonction de l'énergie de balayage correspondant au signal intermédiaire sous la lenteur apparente différente comprend :
la prédéfinition d'un ensemble de paramètres apparents de lenteur et de balayage ; et
l'exécution des opérations suivantes sur chaque lenteur apparente :
acquisition de l'énergie de balayage correspondant au signal intermédiaire sous la lenteur apparente actuelle, et élimination de composantes de spectre FK correspondant à la lenteur apparente inférieure à un seuil d'énergie.

8. Support de stockage lisible par ordinateur, dans lequel le support de stockage stocke une instruction, et l'instruction, lorsqu'elle est exécutée sur un ordinateur, permet à l'ordinateur d'exécuter le procédé d'amélioration du rapport signal sur bruit DAS au moyen d'une transformée FK locale selon l'une quelconque des revendications 1 à 6 sur la base des données de champ d'ondes sismiques DAS acquises par l'instrument d'acquisition DAS.
